(19) Europäisches Patentamt
European Patent Office
Office européen des brevets

(11) Veröffentlichungsnummer: **0 004 080**
**B1**

(12) # EUROPÄISCHE PATENTSCHRIFT

(45) Veröffentlichungstag der Patentschrift: **16.09.81**

(51) Int. Cl.³: **C 01 B 21/22**

(21) Anmeldenummer: **79100703.2**

(22) Anmeldetag: **08.03.79**

(54) **Verfahren zur Herstellung von Distickstoffmonoxid.**

(30) Priorität: **15.03.78 DE 2811181**

(43) Veröffentlichungstag der Anmeldung: **19.09.79 Patentblatt 79/19**

(45) Bekanntmachung des Hinweises auf die Patenterteilung: **16.09.81 Patentblatt 81/37**

(84) Benannte Vertragsstaaten: **BE DE FR GB IT NL**

(56) Entgegenhaltungen:
**CHEMICAL ABSTRACTS, Vol. 69, Nr. 7, 12. August 1968, Nr. 28921z Columbus, Ohio, U.S.A.**
**R. Iv. RUSEV et al.: «New technology in the manufacture of nitrogen monoxide-laughing gas», Seite 2710**
**CHEMICAL ABSTRACTS, Vol. 84, Nr. 16, 19. April 1976, Nr. 111098s Columbus, Ohio, U.S.A.**
**T.MORITA et al.: «Treatment of waste gases by wet process», Seite 368**
**CHEMICAL ABSTRACTS, Vol. 88, Nr. 10, 6. März 1978, Nr. 63799e Columbus, Ohio, U.S.A.**
**T. SHONO et al.: «Dinitrogen monoxide», Seite 83**
**CHEMICAL ABSTRACTS, Vol. 88, Nr. 16, 17. April 1978, Nr. 107503k Columbus, Ohio, U.S.A.**
**T. MATSUMOTO et al.: «Dinitrogen monoxide», Seite 123**

(73) Patentinhaber: **HOECHST AKTIENGESELLSCHAFT, Zentrale Patentabteilung Postfach 80 03 20, D-6230 Frankfurt/Main 80 (DE)**

(72) Erfinder: **Münster, Gerhard, Dr., Habichtsweg 1, D-6232 Bad Soden am Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG.

# Verfahren zur Herstellung von Distickstoffmonoxid

Die Erfindung betrifft ein Verfahren zur Herstellung von Distickstoffmonoxid aus Nitrit und Sulfit.

Die Herstellung von Distickstoffmonoxid erfolgt in der Technik nahezu ausschliesslich durch thermische Zersetzung von Ammoniumnitrat (Ullmann, Enzyklopädie der technischen Chemie, 1964, 3. Auflage, Band 15, Seite 44). Dabei werden gewöhnlich Temperaturen von über 100°C, meist 200 bis 300°C, angewendet. Sofern man dabei nicht in wässrigen Lösungen arbeitet, besteht die Gefahr der unkontrollierten Zersetzung des Ammoniumnitrats, das bekanntlich die Eigenschaften eines Sprengstoffs besitzt. Trotzdem hat sich dieses Verfahren bisher als einziges in der Technik eingeführt und lässt sich unter besonderen Vorkehrungen nahezu risikolos betreiben.

Aus Hollemann-Wiberg, Lehrbuch der Anorganischen Chemie, 1976, Seiten 393 und 419 ist es bekannt, dass aus Nitrit und konzentrierter Natriumhydrogensulfit-Lösung das Natriumsalz der Nitridosulfonsäure entsteht. Dieses wird durch Hydrolyse in saurer Lösung bis zur Amidosulfonsäure abgebaut. Amidosulfonsäure ihrerseits reagiert mit konzentrierter Salpetersäure unter Bildung von $N_2O$. Diese Reaktionsfolge zur Herstellung von $N_2O$ erfordert jedoch grossen Aufwand an Apparaten und Chemikalien und ist daher umständlich.

Aus Chemical Abstracts, Band 84 (1976) Nr. 111 098 s ist ein Verfahren zur Behandlung von Abgasen bekannt, die $SO_x$ und $NO_x$ enthalten. Zur Absorption wird eine Lösung von Natriumsulfit und Natriumbisulfit in Wasser benutzt, die nahezu neutral ist. Aus der beladenen Absorptionslösung lässt sich in einem nicht näher offenbarten anschliessenden Schritt $N_2O$ gewinnen. Hinweise auf die Möglichkeit des Einsatzes von Nitrit finden sich in dieser Literaturstelle nicht.

Es bestand daher die Aufgabe, ein einfaches rasch verlaufendes Verfahren zur Herstellung von $N_2O$ aus leicht zugänglichen Chemikalien zu finden, das keine hohen Temperaturen verlangt.

Die vorliegende Erfindung löst diese Aufgabe.

Gegenstand der Erfindung ist ein Verfahren zur Herstellung von Distickstoffmonoxid, das dadurch gekennzeichnet ist, dass man ein anorganisches Nitrit und eine anorganische $SO_2$-Quelle zu einer wässrigen Lösung mit pH-Werten von 0 bis 3 zugibt und dabei ein Molverhältnis Nitrit/Sulfit von 1:1 bis 1:1,5 verwendet.

Als anorganische Nitrite eignen sich beispielsweise Magnesiumnitrit, insbesondere aber Alkalinitrite, vorzugsweise Natriumnitrit.

Als anorganische $SO_2$-Quelle eignen sich beispielsweise Kalziumsulfit, Alkalisulfite und Alkalibisulfite, insbesondere Natriumbisulfit. Obwohl Sulfite ebenso gut einsetzbar sind wie Bisulfite, haben sie den Nachteil, dass laufend Säure zur Aufrechterhaltung des pH-Bereiches von 0 bis 3 zugegeben werden muss. Bei Verwendung von Natriumnitrit und Natriumbisulfit lässt sich das erfindungsgemässe Verfahren durch folgende Reaktionsgleichung beschreiben:

$$2\,NaNO_2 + 2\,NaHSO_3 \rightarrow N_2O + 2\,Na_2SO_4 + H_2O$$

Man geht hierbei zweckmässig von konzentrierten Lösungen aus (Gehalt an Nitrit und Bisulfit z.B. 40 Gew.-%); jedoch setzen sich auch verdünntere Lösungen im entsprechenden Molverhältnis vollständig um. Die Reaktionstemperaturen liegen dabei zwischen 0 und 100°C, vorzugsweise zwischen 30 und 60°C, insbesondere zwischen 40 und 50°C. Höhere Temperaturen begünstigen die Bildung von Nebenprodukten, z.B. Stickoxid, während bei niederen Temperaturen die Reaktion zu langsam abläuft und das Nitrit u. U. nicht vollständig abreagiert. Vorzugsweise werden Molverhältnisse Sulfit/Nitrit von 1,0 bis 1,1 verwendet. Höhere Überschüsse an Bisulfit (z.B. Verhältnis Sulfit/Nitrit von 1,5 oder höher) führen zu einem höheren $SO_2$-Gehalt im Distickstoffmonoxid bei gleichzeitiger Verringerung des NO-Gehaltes.

Das erfindungsgemässe Verfahren lässt sich in einem weiten Druckbereich durchführen, beispielsweise bei Drucken von 1 bis 10 bar. Bei Anwendung erhöhter Drucke lässt sich dabei das Distickstoffmonoxid bereits in verdichteter Form gewinnen.

Zur Einstellung des pH-Wertes von 0 bis 3 eignen sich starke Säuren wie Salz- und Salpetersäure und vorzugsweise Schwefelsäure. Die Reaktion lässt sich diskontinuierlich oder vorzugsweise kontinuierlich betreiben. Bei der kontinuierlichen Fahrweise werden Nitritlösung, Sulfitlösung und Säure im entsprechenden Mengenverhältnis in einen Reaktor (Rührkessel, Kolonne) eingespeist. Die Reaktionswärme wird durch Kühlung abgeführt. Das entstehende Distickstoffmonoxid enthält ca. 50 bis 90% $N_2O$ und ist durch $N_2$, NO, $SO_2$ und Wasserdampf noch verunreinigt. Bei Einsatz von technischer Natriumnitritlauge (Gehalt an Natriumcarbonat ca. 0,5%) enthält das entstehende Gas auch $CO_2$. Das entstehende Gas wird in bekannter Weise durch Waschen mit Natronlauge und alkalischer Permanganatlösung von den genannten Gasen befreit und anschliessend getrocknet. Stickstoff wird durch Rektifikation des unter Druck verflüssigten Distickstoffmonoxids entfernt.

Als anorganische $SO_2$-Quelle eignet sich insbesondere Schwefeldioxid selbst. Bei Einsatz von Natriumnitrit lässt sich diese Variante durch folgende Reaktionsgleichung beschreiben:

$$2\,NaNO_2 + 2\,SO_2 + H_2O \rightarrow N_2O + 2\,NaHSO_4$$

Man verwendet vorteilhaft verdünnte oder mässig konzentrierte, z.B. 5 bis 20 gewichtsprozentige Natriumnitritlösungen. Mit Lösungen höherer Konzentration kann sich vorübergehend festes

Natriumsulfat bilden, das zu unerwünschten Begleiterscheinungen Anlass gibt (Verstopfung von Leitungen). Ferner nimmt bei dieser Variante der Anteil des als Nebenprodukt gebildeten Stickoxids mit der Konzentration der Nitritlösung zu.

Das Schwefeldioxid wird vorzugsweise als reines Gas eingesetzt; es kann aber auch mit im Kreislauf geführtem Distickstoffmonoxid verdünnt in die Reaktionsmischung eingeführt werden. Da die Reaktion stark exotherm ist, und die entstehende Wärme durch Kühlung abgeführt werden muss, kann es von Vorteil sein, das Schwefeldioxid in flüssiger Form einzuführen. Bei Anwendung von Schwefeldioxid liegen die Reaktionstemperaturen vorzugsweise zwischen 20 und 40°C. Das Molverhältnis Nitrit/$SO_2$ soll dabei entsprechend der Reaktionsgleichung etwa 1:1 betragen.

Auch bei Verwendung von $SO_2$ lässt sich das Verfahren diskontinuierlich, vorzugsweise aber kontinuierlich betreiben. Bei der kontinuierlichen Fahrweise wird beispielsweise Natriumnitritlösung in einem mit $SO_2$ begasten Rührkessel eingespeist, wobei die Reaktionswärme durch Kühlung abgeführt wird. Das entweichende Distickstoffmonoxid wird im Gegenstrom über eine Kolonne mit der zulaufenden $NaNO_2$-Lösung gewaschen und dadurch von $SO_2$ befreit. Durch Messung des Redoxpotentials im Reaktionsgefäss lässt sich der Zulauf der Natriumnitritlösung in das Reaktionsgefäss regeln und ein Überschuss an Nitrit vermeiden.

Man kann auch in einer Kolonne die Natriumnitrit-Lösung am Kopf und das $SO_2$-Gas im Gegenstrom unten zuführen, wobei man durch intensive Kühlung dafür sorgen muss, dass die Reaktionswärme abgeführt wird. Bei dieser Gegenstromvariante kann die ausreagierte Lösung noch gelöstes Schwefeldioxid enthalten, sowie andere stickstoffhaltige reduzierende Stoffe, wie Hydroxylamin (ca. 1 bis 3 Mol-%, bezogen auf eingesetztes Nitrit). Im allgemeinen enthält die ausreagierte Lösung bei geeigneter Reaktionsführung jedoch weder Nitrit, noch Bisulfit. Sie besteht bei Einsatz von Natriumsalzen im wesentlichen aus einer sauren wässrigen Lösung von Natriumsulfat, aus der in bekannter Weise Glaubersalz oder wasserfreies Natriumsulfat durch Kristallisation gewonnen werden kann.

Das Verfahren ist besonders dann wirtschaftlich, wenn man als anorganisches Nitrit die bei der alkalischen Absorption von nitrosehaltigen Abgasen anfallenden Lösungen einsetzt, die neben Nitrit noch Nitrat enthalten. Ebenso lassen sich Natriumbisulfit-Lösungen, die aus schwefeldioxidhaltigen Abgasen bei der Gaswäsche mit Natronlauge anfallen, auf diese Weise beseitigen und verwerten. Distickstoffmonoxid (Lachgas) wird in der Anästhesie als Narkosemittel verwendet. Die Erfindung wird durch die nachfolgenden Beispiele näher erläutert.

Beispiel 1

Als Reaktionsgefäss wurde ein ummanteltes 2-Liter-Rührgefäss mit Überlauf verwendet. Mittels Dosierpumpen wurden in das Gefäss stündlich 400 ml einer 7,77molaren Natriumnitritlösung und 620 ml einer 5,13molaren Natriumbisulfitlösung eingespeist (Molverhältnis Bisulfit: Nitrit = 1,04). Der pH-Wert wurde durch geregelten Zulauf von 3molarer Schwefelsäure bei 0,5 gehalten, wofür stündlich etwa 400 ml dieser Säure benötigt wurden. Die Temperatur im Reaktionsgefäss wurde durch Mantelkühlung mit Kühlwasser auf 40°C gehalten. Es entwickelten sich stündlich 42,8 l wasserdampfgesättigtes Distickstoffmonoxid von 20°C und 1,013 bar. Die ablaufende Lösung war frei von Nitrit.

Beispiel 2

In der gleichen Apparatur wie in Beispiel 1 wurden stündlich 390 ml 7,77molare technische $NaNO_2$-Lösung und 630 ml 5,13molare $NaHSO_3$-Lösung zudosiert (Molverhältnis Bisulfit:Nitrit = 1,06). Der pH-Wert wurde durch geregelten Zulauf von ca. 200 ml/h 3molarer Schwefelsäure auf 0,9 eingestellt. Die Temperatur betrug 40°C. Es wurden pro Stunde 37,1 l Distickstoffmonoxid (feucht; 20°C und 1,013 bar) entwickelt. Das trockene Gas hatte folgende Zusammensetzung: $N_2O$ 90%; NO 7,6%; $CO_2$ 2,1%; $N_2$ 0,58%; $SO_2$ 0,1%. Die ablaufende Lösung war nitritfrei.

Beispiel 3

In der gleichen Apparatur wie in Beispiel 1 wurden bei 40°C stündlich 400 ml 7,77molare $NaNO_2$-Lösung und 630 ml 5,13molare $NaHSO_3$ Lösung umgesetzt (Molverhältnis Bisulfit:Nitrit = 1,04). Der pH-Wert wurde durch geregelten Zulauf von ca. 90 ml/h 3molarer Schwefelsäure auf 1,9 eingestellt. Es wurden pro Stunde 43,7 l Distickstoffmonoxid (feucht; 20°C und 1,013 bar) entwickelt. Die ablaufende Lösung enthielt noch geringe Mengen an Nitrit.

Beispiel 4

In der gleichen Apparatur wie in Beispiel 1 wurden stündlich 400 ml 7,77molare $NaNO_2$-Lösung und 620 ml 5,13molare $NaHSO_3$-Lösung umgesetzt (Molverhältnis Bisulfit:Nitrit = 1,02). Die Temperatur wurde durch einen Umlaufthermostaten bei 80°C gehalten. Der pH-Wert wurde durch geregelten Zulauf von ca. 230 ml/h 3molarer Schwefelsäure auf 1,1 eingestellt. Die stündlich entwickelte Gasmenge betrug 40,5 l (feucht; 20°C und 1,013 bar). Das trockene Gas besass folgende Zusammensetzung: $N_2O$ 71%; NO 14%; $CO_2$ 1,7%; $N_2$ 4,7%; $SO_2$ 7,9%. Die ablaufende Lösung war nitritfrei.

Beispiel 5

In der Apparatur nach Beispiel 1 wurden stündlich 385 ml einer 7,77molaren Natriumnitritlösung und 860 ml einer 5,13molaren Natriumbisulfitlösung umgesetzt (Molverhältnis Bisulfit:Nitrit = 1,48). Die Temperatur betrug 40°C, der pH-Wert wurde durch Zulauf von ca. 260 ml/h 3molarer Schwefelsäure auf 0,8 eingestellt. Es entwickelten sich pro Stunde 33,7 l Distickstoffmonoxid (feucht; 20°C und 1,013 bar). Das trockene Gas

besass folgende Zusammensetzung: $N_2O$ 84%; NO 2,0%; $CO_2$ 2,2%; $N_2$ 2,0%; $SO_2$ 9,1%. Die ablaufende Lösung war nitritfrei.

Beispiel 6

In der Apparatur nach Beispiel 1 wurden stündlich 400 ml einer 7,77molaren Natriumnitritlösung und 885 ml einer 5,13molaren Natriumbisulfitlösung umgesetzt (Molverhältnis Bisulfit: Nitrit = 1,46). Die Temperatur betrug 40 °C, der pH-Wert wurde durch Zulauf von ca. 210 ml/h 3molarer Schwefelsäure auf 2,0 eingestellt. Es entwickelten sich pro Stunde 28,6 l Distickstoffmonoxid (feucht; 20 °C und 1,013 bar). Die ablaufende Lösung war nitritfrei.

Beispiel 7

In der gleichen Apparatur wie in Beispiel 1 wurden stündlich 320 ml 7,77molare $NaNO_2$-Lösung und 600 ml 5,13molare $NaHSO_3$-Lösung umgesetzt (Molverhältnis Bisulfit: Nitrit = 1,24). Der pH-Wert wurde durch geregelten Zulauf von ca. 190 ml/h 3molarer Schwefelsäure auf 0,8 eingestellt. Durch Kühlung der Reaktionsmischung mit einer Kühlflüssigkeit aus einem Kältethermostaten wurde die Reaktionstemperatur auf +14 °C gehalten. Es entwickelten sich stündlich 19,7 l Gas (feucht; 20 °C und 1,013 bar). Das trockene Gas besass folgende Zusammensetzung: $N_2O$ 90%; NO 2,7%; $CO_2$ 3,1%; $N_2$ 4,9%; $SO_2$ 0,77%. In der Reaktionsmischung kristallisierte Glaubersalz ($Na_2SO_4 \cdot 10\, H_2O$) aus. Von Zeit zu Zeit wurde ein entsprechender Anteil Suspension abgelassen. In der überstehenden Lösung war noch ca. 1 Äquivalent pro Liter an reduzierenden Stoffen enthalten (Hydroxylamin).

Beispiel 8

In der gleichen Apparatur wie in Beispiel 1 wurden stündlich 400 ml einer 7,77molaren $NaNO_2$-Lösung und 620 ml einer 5,13molaren $NaHSO_3$-Lösung umgesetzt (Molverhältnis Bisulfit: Nitrit = 1,02). Durch Beheizung des Gefässmantels mit Niederdruckdampf wurde im Reaktionsgefäss eine Temperatur von 98 °C erreicht. Der pH-Wert wurde durch geregelten Zulauf von ca. 260 ml/h 1molarer Schwefelsäure auf 1,5 eingestellt. Die stündlich entwickelte Gasmenge betrug 45,2 l (feucht; 35 °C und 1,013 bar). Das trokkene Gas besass folgende Zusammensetzung: $N_2O$ 66%; NO 31%; $CO_2$ 2,1%; $N_2$ 0,22%; $SO_2$ unter 0,1%. In der Reaktionsmischung kristallisierte wasserfreies Natriumsulfat aus. Von Zeit zu Zeit wurde ein entsprechender Anteil Suspension abgelassen. In der überstehenden Lösung waren noch 0,085 Äquivalente pro Liter an reduzierenden Stoffen enthalten (Hydroxylamin).

Beispiel 9

In eine ummantelte Glockenbodenkolonne aus Glas mit 50 mm Innendurchmesser und 5 Böden wurden mittels einer Dosierpumpe am Kopf 250 ml/h einer 2molaren Natriumnitritlösung (hergestellt durch Verdünnen einer 40%igen technischen Natriumnitritlösung der Zusammensetzung 37–41% $NaNO_2$, 2–3% $NaNO_3$, ca. 0,5% $Na_2CO_3$ und ca. 0,1% NaOH mit Wasser) aufgegeben. Am Fuss der Kolonne wurden 11,2 l/h $SO_2$ im Normzustand zugeführt. Durch Adjustieren der Reaktanden wurde die Reaktionszone auf dem mittleren und dem darunterliegenden Kolonnenboden gehalten. Die Reaktionswärme wurde durch Kühlung des Kolonnenmantels mit Wasser (Wassertemperatur +15 °C) abgeführt. Es entwikkelten sich 7,4 l/h wasserdampfgesättigtes Distickstoffmonoxid von 20 °C und 1,013 bar. Das trockene Gas enthielt 52% $N_2O$, 46% NO, 1,4% $CO_2$ und 1,1% $N_2$. Die ablaufende Natriumbisulfatlösung vom pH-Wert 0,3 war mit $SO_2$ gesättigt.

Beispiel 10

Als Reaktionsgefäss wurde ein ummanteltes 2-Liter-Rührgefäss mit Überlauf verwendet. In die vorgelegte, ausreagierte Natriumbisulfatlösung wurden stündlich 22,4 l $SO_2$ im Normzustand eingeleitet. Eine 2molare Natriumnitritlösung wurde aus einem Tropftrichter mit Magnetventil zugeführt. Das Redoxpotential der Lösung wurde mit einer Platinelektrode gegen eine gesättigte Kalomelektrode gemessen und steuerte das Magnetventil in der Weise, dass bei einer Potentialdifferenz von weniger als 350 m das Ventil geöffnet wurde. Auf diese Weise wurden stündlich ca. 500 ml 2molare Natriumnitritlösung zudosiert. Die Reaktionswärme wurde durch Mantelkühlung mit Kühlwasser abgeführt. Die Reaktionstemperatur lag bei 20 °C. Die stündlich entwickelte Gasmenge betrug 12,7 l (feucht; 20 °C und 1,013 bar). Das trockene Gas hatte folgende Zusammensetzung: 92% $N_2O$; 5,9% NO; 0,39% $N_2$, 0,67% $SO_2$ und 1,8% $CO_2$.

Die ablaufende Natriumbisulfatlösung vom pH-Wert 0,4 wies nur einen schwachen Geruch nach $SO_2$ auf. Nach Ausblasen des gelösten $SO_2$ mit Stickstoff wurde ein Teil der Lösung mit 0,1n $KMnO_4$-Lösung titriert. Die Lösung enthielt 0,085 Äquivalente pro Liter an reduzierenden Substanzen (Hydroxylamin).

Beispiel 11

Es wurde das gleiche Reaktionsgefäss wie in Beispiel 10 verwendet, nur wurde das entwickelte Gas über eine ummantelte Glockenbodenkolonne mit 5 Böden und 50 mm Innendurchmesser geleitet, wo es im Gegenstrom mit der zulaufenden Natriumnitritlösung gewaschen und von $SO_2$ befreit wurde. Der Ablauf der Kolonne wurde wie die Natriumnitritlösung in Beispiel 2 über das gesteuerte Magnetventil in das Reaktionsgefäss eingeleitet, während die frische Natriumnitritlösung in der gleichen Menge mittels einer Dosierpumpe auf den Kopf der Kolonne aufgegeben wurde. Reaktionsgefäss und Kolonne wurden mit Kühlwasser gekühlt. Die Temperatur im Reaktionsgefäss lag bei 20 °C. Die stündlich dosierten Mengen betrugen 22,4 l $SO_2$ im Normzustand und 580 ml 2molare Natriumnitritlösung. Am Kopf der Kolonne wurden 14,5 l/h Distickstoffmonoxid (feucht; 20 °C und 1,013 bar) abgenommen. Das trockene Gas enthielt 88% $N_2O$, 10% NO, 0,36%

$N_2$ und 2,1% $CO_2$. Die ablaufende Lösung wurde nach Ausblasen des $SO_2$ mit 0,1n KMn $O_4$-Lösung titriert. Sie enthielt 0,054 Äquivalente pro Liter an reduzierenden Substanzen (Hydroxylamin).

**Patentansprüche**

1. Verfahren zur Herstellung von Distickstoffmonoxid, dadurch gekennzeichnet, dass man in eine wässrige Lösung mit pH-Werten von 0 bis 3 ein anorganisches Nitrit und eine anorganische $SO_2$-Quelle zugibt und dabei Molverhältnisse Nitrit/Sulfit von 1:1 bis 1:1,5 verwendet.

2. Verfahren nach Anspruch 1, dadurch gekennzeichnet, dass man bei Temperaturen von 0 bis 100°C arbeitet.

3. Verfahren nach Anspruch 1, dadurch gekennzeichnet, dass man als anorganische $SO_2$-Quelle Schwefeldioxid verwendet.

4. Verfahren nach Anspruch 1, dadurch gekennzeichnet, dass das entstehende Gas durch Waschen mit Lauge und alkalischer Permanganat-Lösung gereinigt wird.

5. Verfahren nach Anspruch 1, dadurch gekennzeichnet, dass die Zugabe des anorganischen Nitrits über das Redoxpotential der wässrigen Lösung gesteuert wird.

**Claims**

1. Process for the preparation of nitrous oxide, which comprises introducing into an aqueous solution having a pH value of from 0 to 3 an inorganic nitrite and an inorganic $SO_2$ source, while applying molar ratios of nitrite to sulfite of from 1:1 to 1:1,5.

2. Process as claimed in claim 1, which comprises working at a temperature in the range of from 0 to 100°C.

3. Process as claimed in claim 1, which comprises using sulfur dioxide as inorganic $SO_2$ source.

4. Process as claimed in claim 1, wherein the gas being formed is purified by washing with aqueous alkali metal hydroxide solution and an alkaline permanganate solution.

5. Process as claimed in claim 1, which comprises controlling the addition of the inorganic nitrite via the redox potential of the aqueous solution.

**Revendications**

1. Procédé de préparation de l'oxyde nitreux, caractérisé en ce qu'on ajoute un nitrite minéral et une source minérale de $SO_2$ à une solution aqueuse dont le pH est compris entre 0 et 3, le rapport molaire du nitrite au sulfite étant alors réglé entre 1:1 et 1:1,5.

2. Procédé selon la revendication 1, caractérisé en ce qu'on opère à des températures de 0 à 100°C.

3. Procédé selon la revendication 1, caractérisé en ce qu'on utilise l'anhydride sulfureux comme source minérale de $SO_2$.

4. Procédé selon la revendication 1, caractérisé en ce que le gaz qui se forme est purifié par lavage avec une lessive caustique et une solution alcaline de permanganate.

5. Procédé selon la revendication 1, caractérisé en ce que l'addition du nitrite minéral est commandée par le potentiel redox de la solution aqueuse.